Europäisches Patentamt

European Patent Office

Office européen des brevets

(11) Numéro de publication: **0 464 291 A1**

# DEMANDE DE BREVET EUROPEEN

(21) Numéro de dépôt: **90401947.8**

(51) Int. Cl.5: **A01M 7/00**

(22) Date de dépôt: **05.07.90**

(43) Date de publication de la demande:
**08.01.92 Bulletin 92/02**

(84) Etats contractants désignés:
**AT BE CH DE DK ES GB IT LI NL SE**

(71) Demandeur: **ETABLISSEMENTS EVRARD**

**F-62990 Beaurainville(FR)**

(72) Inventeur: **Blondeel, Alain**

**F-62170 Attin(FR)**

(74) Mandataire: **Coutel, Jean-Claude**
**Cabinet AYMARD & COUTEL 20, rue Vignon**
**F-75009 Paris(FR)**

(54) Perfectionnements aux rampes de pulvérisation, notamment en agriculture.

(57) La rampe de pulvérisation, notamment pour l'agriculture, est constituée par des poutres 3, 4 et 5 en matière synthétique résistante assemblées en treillis aux noeuds duquel sont prévues des pièces de raccordement (6), par exemple du type à manchons, qui peuvent être collées. Cette matière synthétique est par exemple une résine époxy, une résine polyester ou une résine isophtalique, de préférence renforcée, par exemple par des fibres de verre, de carbone ou d'aramide.

La présente invention est relative aux rampes de pulvérisation, notamment en agriculture.

La tendance actuelle, tout particulièrement en agriculture, est de concevoir des rampes de grande longueur, ce qui permet de traiter une grande surface de terrain à chaque passage. Toutefois, cette augmentation de longueur des rampes implique actuellement une augmentation des coûts de fabrication et de poids.

Par le document GB-A-2.100.962, on connaît une rampe de pulvérisation qui est constituée par un faisceau de fibres continues disposées par enroulement ou bobinage sur un gabarit amovible suivant une forme en treillis. Après durcissement des fibres continues, le gabarit est enlevé pour donner naissance à une structure rigide en treillis. Dans ce document, on ne mentionne pas l'existence de poutres proprement dites, et la technique de fabrication est délicate, longue et coûteuse.

Par le document US-A-3.665.670, on décrit un support en treillis qui est constitué par l'assemblage de poutres assemblées par des pièces de raccordement du type à manchons.

L'invention a pour but, notamment de fournir une nouvelle structure de rampe de pulvérisation qui est d'une fabrication économique et qui est légère tout en étant extrêmement résistante.

A cet effet, la rampe selon l'invention est caractérisée par le fait qu'elle est constituée par des poutres en matière synthétique résistante assemblées en treillis aux noeuds duquel sont prévues des pièces de raccordement.

La matière synthétique est par exemple une résine époxy, une résine polyester ou une résine isophtalique, de préférence renforcée par exemple par des fibres de verre, de carbone ou d'aramide.

Quant aux poutres, elles peuvent être constituées soit par des tubes, soit par des tiges.

Pour l'assemblage des poutres entre elles, les pièces de raccordement sont par exemple du type à manchons ; de préférence, l'assemblage est réalisé par collage des poutres et de ces pièces de raccordement.

Le treillis est par exemple constitué par des longerons, formés par l'assemblage en ligne de plusieurs poutres, et par des traverses, et le cas échéant par des entretoises de raidissement.

Quant à la section de la rampe, elle peut soit être constante, soit être décroissante vers l'extrémité libre de la poutre, la section droite étant par exemple polygonale (triangulaire, carrée, rectangulaire, trapézoïdale, etc.), ou courbe (circulaire, elliptique, etc...).

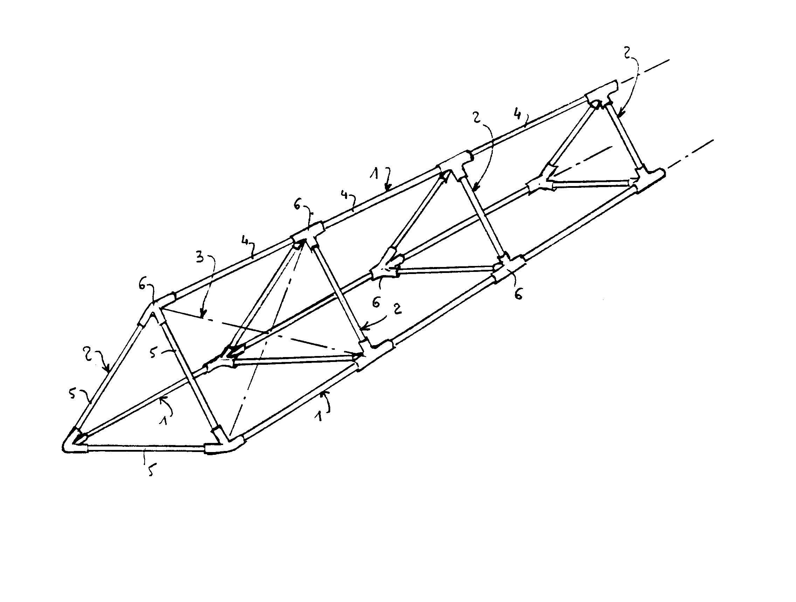

On comprendra bien l'invention à la lecture du complément de description qui va suivre et en référence au dessin annexé dont la Figure unique est une perspective montrant une partie d'une rampe établie selon un mode de réalisation préféré de l'invention.

Comme montré sur la Figure, la rampe selon l'invention, dont une partie seulement est représentée, est constituée par l'assemblage en treillis d'une multiplicité de poutres.

Dans l'exemple représenté, la rampe est de section triangulaire équilatérale, et le treillis est constitué par des longerons 1, des traverses 2, et éventuellement des entretoises 3 dont deux seulement ont été représentées en traits mixtes pour la clarté du dessin.

Chaque longeron 1 est constitué par l'assemblage en ligne de poutres unitaires 4 ; chaque traverse 2 est constituée par l'assemblage en triangle équilatéral de trois poutres 5.

A chaque noeud de jonction entre les longerons 1 et les traverses 2, la rampe comporte une pièce de raccordement 6, de préférence du type à manchons, cette pièce étant par exemple en matière plastique et étant agencée pour recevoir et immobiliser le nombre voulu de poutres. De préférence, l'assemblage des poutres et des pièces de raccordement 6 est assuré par collage.

Dans l'exemple non limitatif représenté, les pièces intermédiaires de raccordement 6 comportent quatre manchons, et le cas échéant cinq si elles reçoivent une entretoise 3, et les pièces extrêmes de raccordement 6 comportent trois manchons, et éventuellement quatre ou cinq manchons si elles reçoivent une ou deux entretoises 3.

Dans l'exemple représenté, la rampe est de section triangulaire et décroissante vers son extrémité libre. Bien entendu, la rampe pourrait avoir une section constante et d'une forme différente, par exemple carrée, rectangulaire, trapézoïdale, ou autre forme polygonale ; cette section droite pourrait également être courbe, par exemple circulaire ou d'allure elliptique.

Les poutres 3, 4 et 5, qui sont constituées par des tubes ou par des tiges, sont en une matière synthétique résistante, par exemple en résine époxy, polyester ou isophtalique, de préférence renforcée, par exemple par des fibres de verre, de carbone ou d'aramide.

Une rampe selon l'invention réalisée comme indiqué ci-dessus présente divers avantages : à partir de poutres unitaires coupées à la longueur voulue, on peut réaliser des rampes de géométries très variées ; la rampe est extrêmement légère et résistante en raison de sa conception en treillis et des matériaux utilisés ; par ailleurs, elle est d'un prix de revient très intéressant, ce qui résulte de sa simplicité de fabrication et de sa constitution.

**Revendications**

1. Rampe de pulvérisation, notamment pour l'agriculture, caractérisée par le fait qu'elle est constituée par des poutres (3, 4, 5) en matière synthétique résistante assemblées en treillis aux noeuds duquel sont prévues des pièces de raccordement (6).

2. Rampe selon la revendication 1, caractérisée par le fait que la matière synthétique appartient au groupe constitué par les résines époxy, les résines polyester et les résines isophtaliques.

3. Rampe selon l'une des revendications 1 et 2, caractérisée par le fait que la matière synthétique est renforcée.

4. Rampe selon la revendication 3, caractérisée par le fait que la matière de renforcement appartient au groupe constitué par les fibres de verre, les fibres de carbone et les fibres d'aramide.

5. Rampe selon l'une des revendications 1 à 4, caractérisée par le fait que les poutres appartiennent au groupe constitué par des tubes et des tiges.

6. Rampe selon l'une des revendications 1 à 5, caractérisée par le fait que les pièces de raccordement (6) sont du type à manchons.

7. Rampe selon l'une des revendications 1 à 6, caractérisée par le fait que les poutres et les pièces de raccordement sont collées entre elles.

8. Rampe selon l'une des revendications 1 à 7, caractérisée par le fait que les poutres définissent des longerons (1) et des traverses (2), et éventuellement des entretoises de raidissement (3).

9. Rampe selon l'une des revendications 1 à 8, caractérisée par le fait qu'elle est de section constante.

10. Rampe selon l'une des revendications 1 à 8, caractérisée par le fait qu'elle est de section décroissante vers son extrémité libre.

Office européen
des brevets

**RAPPORT DE RECHERCHE
EUROPEENNE**

Numéro de la demande

**EP 90 40 1947**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | GB-A-2 100 962   (THE BRITISH PETROL. CO.)<br>* Pages 1-2; figures 1-3 *<br>– – – | 1-10 | A 01 M 7/00 |
| Y,D | US-A-3 665 670   (D.R. RUMMLER)<br>* Colonne 2, ligne 74 - colonne 3, ligne 55; figurs 3-5 *<br>– – – – – | 1-10 | |

DOMAINES TECHNIQUES
RECHERCHES (Int. Cl.5)

A 01 M
E 04 B

Le présent rapport de recherche a été établi pour toutes les revendications

| Lieu de la recherche | Date d'achèvement de la recherche | Examinateur |
|---|---|---|
| La Haye | 05 mars 91 | WOHLRAPP R.G. |